# EUROPEAN PATENT SPECIFICATION

(11) **EP 3 898 275 B1**
(45) Date of publication and mention of the grant of the patent: **19.07.2023**
(21) Application number: 19836832.6
(22) Date of filing: 19.12.2019
(51) Int. Cl.: D02G 3/48, B60C 9/00, B60C 9/04

(54) **TYRE FOR VEHICLE WHEELS**
REIFEN FÜR FAHRZEUGRÄDER
PNEUMATIQUE POUR ROUES DE VÉHICULE

(30) Priority: 20.12.2018 IT 201800020305
(43) Date of publication of application: 27.10.2021
(73) Proprietor: Pirelli Tyre S.p.A., 20126 Milano (IT)
(72) Inventor: AGRESTI, Simone, 20126 Milano (IT); DAGHINI, Guido Luigi, 20126 Milano (IT); RAMPANA, Barbara, 20126 Milano (IT)
(74) Representative: Porta & Consulenti Associati S.p.A.
(86) International application number: PCT/IB2019/061088
(87) International publication number: WO 2020/128943

(56) References cited:
- WO-A1-80/00069
- GB-A- 1 253 216
- US-A- 4 240 486

## Description

The present invention relates to a tyre for vehicle wheels.

The tyre of the invention is, preferably, a tyre for sports vehicle wheels, in particular for high and ultra-high performance automobiles.

Tyres for high and ultra-high performance automobiles, commonly defined as "HP" or "UHP", are in particular those that allow speeds of over 200 km/h, up to over 300 km/h, to be reached. Examples of such tyres are those belonging to classes "T", "U", "H", "V", "Z", "W", "Y", according to the E.T.R.T.O. (European Tyre and Rim Technical Organisation) standard and racing tyres, in particular for high-piston displacement four-wheeled vehicles. Typically, the tyres belonging to such classes have a section width equal to or greater than 185 mm, preferably comprised between 195 mm and 385 mm, more preferably comprised between 195 mm and 355 mm. Such tyres are preferably mounted on rims having fitting diameters equal to or greater than 13 inches, preferably not greater than 24 inches, more preferably comprised between 16 inches and 23 inches.

The tyre of the invention can however be used in vehicles different from the aforementioned automobiles, for example in high-performance sports motorcycles.

The tyre of the invention comprises hybrid reinforcing cords, as defined throughout this description.

### PRIOR ART

Tyres with reinforcing cords comprising a core made of textile material and, around the core, a winding of one or more textile filaments made of a material different from that of the core are described, for example, in US 7222481 B2, EP 3196343 A1, US 4343343 A1, EP 329590 A1.

Tyres with reinforcing cords comprising a core made of a monofilament textile wire and at least one multifilament textile yarn wound about the core are described in US 4240486 A, WO 80/00069 A1 and GB 1253216 A.

### SUMMARY OF THE INVENTION

Throughout the present description and in the following claims, when reference is made to certain values of certain angles, these are meant as absolute values, i.e. both positive values and negative values with respect to a plane or a reference direction, unless specified otherwise.

Moreover, when reference is made to any range of values comprised between a minimum value and a maximum value, the aforementioned minimum and maximum values are meant to be included in the aforementioned range, unless specified otherwise.

Hereinafter, the following definitions apply.

The term "equatorial plane" of the tyre is used to indicate a plane perpendicular to the rotation axis of the tyre and that divides the tyre into two symmetrically equal parts.

The terms "radial" and "axial" and the expressions "radially inner/outer" and "axially inner/outer" are used with reference, respectively, to a direction substantially parallel to the equatorial plane of the tyre and to a direction substantially perpendicular to the equatorial plane of the tyre, i.e. respectively to a direction substantially perpendicular to the rotation axis of the tyre and to a direction substantially parallel to the rotation axis of the tyre.

The terms "circumferential" and "circumferentially" are used with reference to the direction of the annular extension of the tyre, i.e. to the rolling direction of the tyre, which corresponds to a direction lying on a plane coinciding with or substantially parallel to the equatorial plane of the tyre.

The term "substantially axial direction" is used to indicate a direction inclined, with respect to the equatorial plane of the tyre, by an angle comprised between about 70° and about 90°.

The term "substantially circumferential direction" is used to indicate a direction oriented, with respect to the equatorial plane of the tyre, at an angle comprised between about 0° and about 10°.

The term "elastomeric material" or "elastomer" is used to indicate a material comprising a vulcanizable natural or synthetic polymer and a reinforcing filler, wherein such a material, at room temperature and after having been subjected to vulcanization, can have deformations caused by a force and is capable of quickly and energetically recovering the substantially original shape and size after the elimination of the deforming force (according to the definitions of the ASTM D1566-11 Standard Terminology Relating To Rubber).

The expression "reinforcing cord", or more simply "cord" is used to indicate an element consisting of one or more elongated elements (also identified as "wires" or "yarns") possibly coated with, or embedded in, a matrix of elastomeric material.

Hereinafter, the expression "wire" will be used to refer to a single elongated element made of metallic material or to a single elongated element consisting of a single textile filament (in which case the expression "monofilament textile wire" will also be used), whereas the expression "yarn" will be used to refer to an elongated element consisting of the aggregation of a plurality of textile filaments (in which case the expression "multifilament textile yarn" will also be used).

Each filament can also be identified as "fiber".

The yarns can have one or more "ends", where the term "end" is used to indicate a bundle of filaments twisted together. Preferably, a single end, or at least two ends twisted together, is/are provided.

The reinforcing textile cords can be identified with a symbol that represents the textile material, the count of the fiber used and the number of ends forming the reinforcing cord. For example, a reinforcing cord with ends made of Aramid (aromatic polyamide) identified as Ar1672 indicates a cord comprising Aramid fibers with count 1670 dTex, formed of two ends twisted together.

The term "strand" is used to indicate the union of at least two wires or yarns to constitute an elongated element intended to be twisted with at least another elongated element to form the reinforcing cord. The two strands that form the reinforcing cord can be equal to each other or different from each other.

The expression "hybrid reinforcing cord" is used to indicate a reinforcing cord comprising at least one monofilament textile wire and at least one multifilament textile yarn, wherein the wire and the yarn can be made of the same textile material or from different textile materials.

The expression "non-hybrid reinforcing cord" is used to indicate a reinforcing cord comprising only monofilament textile wires or only multifilament textile yarns.

The term "diameter" of a reinforcing cord, or of a wire or yarn, is used to indicate the diameter measured as prescribed by the method BISFA E10 (The International Bureau For The Standardization Of Man-Made Fibres, Internationally Agreed Methods For Testing Steel Tyre Cords, 1995 edition).

In the case of yarns, the term "diameter" of a yarn is used to indicate the diameter of an ideal circumference that circumscribes all of the filaments defining the yarn.

The term "radial carcass structure" is used to indicate a carcass structure comprising a plurality of reinforcing cords, each of the cords being oriented along a substantially axial direction. Such reinforcing cords can be incorporated in a single carcass layer or in many carcass layers (preferably two) radially juxtaposed over one another.

The term "crossed belt structure" is used to indicate a belt structure comprising a first belt layer including reinforcing cords substantially parallel to one another and inclined with respect to the equatorial plane of the tyre by a predetermined angle and at least one second belt layer arranged in a radially outer position with respect to the first belt layer and including reinforcing cords substantially parallel to one another but oriented, with respect to the equatorial plane of the tyre, with an inclination opposite to that of the reinforcing cords of the first layer.

The term "zero degrees belt layer" is used to indicate a reinforcing layer comprising at least one reinforcing cord wound on the belt structure according to a substantially circumferential winding direction.

The term "thread count" of a layer is used to indicate the number of reinforcing cords per unit of length which are provided in such a layer. The thread count is measurable in cords/dm (number of cords per decimetre).

The term "linear density" or "count" of a cord or of a wire/yarn is used to indicate the weight of the cord or of the wire/yarn per unit of length. The linear density is measurable in dtex (grams per 10 km of length). For the measurement of the linear density reference is made to flat wires/yarns, without twists applied in the testing step or in the twisting step, according to the tests regulated by BISFA. For example, reference is made to:
for aramid fibers (AR):
   - Testing methods for para-aramid fibre yarns, 2002 Edition,
      - Determination of the linear density - Chapter 6
      - Determination of the tensile properties - Chapter 7 - Test procedure - Paragraph 7.5 - with procedure with initial pre tensioning;
for lyocell fibers:
   - Determination of the linear density - Chapter 6
   - Testing methods for viscose, cupro, acetate, triacetate and lyocell filament yarns - 2007 Edition, Determination of tensile properties - Chapter 7 - Tensile test conditions: oven dry test - Table 7.1 - Test procedure - Paragraph 7.5 - With oven dry test on relaxed samples - Subparagraph 7.5.2.4.

Tyres for sports automobiles require a high ability to adhere to the ground, so as to be able to effectively discharge to the ground the high drive torque which they are subjected to and, therefore, achieve a high thrust and an effective braking force. Such tyres must also be light and provide an adequate response to the lateral stresses which the tyre is subjected to during cornering.

Tyres for sports automobiles typically comprise a radial carcass structure extending between opposite bead structures, a crossed belt structure arranged in a radially outer position with respect to the carcass structure, a zero degrees reinforcing layer arranged in a radially outer position with respect to the crossed belt structure and a tread band arranged in a radially outer position with respect to the zero degrees reinforcing layer.

The carcass structure is intended to provide the tyre with the desired features of integrity and structural strength, whereas the belt structure, in addition to contribute to the provision of the aforementioned features of integrity and structural strength, is intended to transfer to the carcass structure the lateral and longitudinal stresses which the tyre is subjected to in travel upon contacting the road surface, so as to provide the tyre with the desired features of performance (i.e. grip, driving stability, controllability, directionality, roadholding) and comfort. The zero degrees reinforcing layer, on the other hand, is intended to limit the radial deformation of the belt structure.

For these reasons, in the carcass structure and in the belt structure one or more reinforcing layers are provided, each reinforcing layer comprising a plurality of reinforcing cords properly inclined with respect to the circumferential or rolling direction.

In the context of the general trend to reduce CO₂ emissions into the atmosphere, the Applicant has considered the problem of reducing the rolling resistance of its tyres, including tyres for sports automobiles.

The Applicant has thus hypothesized using reinforcing cords that are as light as possible in its own tyres for sports automobiles, and has thus focused its attention on textile reinforcing cords.

The Applicant has observed that even just depending on the type of elongated elements used in the reinforcing cord (monofilament textile wires, multifilament textile yarns and/or possible combination of one or more of the aforementioned wires with one or more of the aforementioned yarns) it is possible to make a plurality of hybrid reinforcing cords having features such as to be theoretically suitable for being used in the carcass structure and/or in the belt structure of tyres for sports automobiles.

In particular, the Applicant has observed that, the material and diameter being equal, monofilament textile wires are more suitable than multifilament textile yarns for withstanding the compression stresses and for reducing the hysteresis caused by the mutual friction between wires and/or textile filaments, whereas multifilament textile yarns are more suitable than monofilament textile wires for withstanding bending stresses and for adhering to the surrounding elastomeric material.

The Applicant has considered that in tyres for any type of vehicle it is necessary to obtain a good adhesion of the reinforcing cords with the surrounding elastomeric material. This would lead to the use of reinforcing cords comprising multifilament textile yarns in the tyres.

However, in order to reduce the problems of hysteresis and also provide the aforementioned reinforcing cords with the desired resistance to the compression stresses which the reinforcing cords can be subjected to, monofilament textile wires are most suitable, as stated above.

Solving this contradiction, the Applicant has found that a hybrid reinforcing cord made by twisting together at least two strands of textile material, where each of the aforementioned strands comprises at least one multifilament textile yarn and a monofilament textile wire arranged so that, in all of the cross sections of the reinforcing cord, the monofilament textile wire is at least partially embedded or incorporated in the filaments of at least one multifilament textile yarn, has an excellent ability to adhere to the surrounding elastomeric material, excellent fatigue resistance and an optimal compromise both in terms of resistance to bending and compression and in terms of hysteresis.

Moreover, thanks to the aforementioned incorporation the hybrid reinforcing cord has a substantially isostatic behaviour when subjected to a compression stress, i.e. all of the components of the reinforcing cord (monofilament textile wires and filaments of the multifilament textile yarns) are stressed substantially in the same way.

With particular reference to the adhesion, according to the Applicant, the even only partial incorporation of the monofilament textile wire in the filaments of the multifilament textile yarn ensures that in every cross section of the reinforcing cord there is at least one sufficiently large portion of outer surface of the reinforcing cord that is defined by the filaments of the multifilament textile yarn and, therefore, provided with an excellent ability to adhere to the surrounding elastomeric material. Such adhesion is greater the greater the portion of monofilament textile wire that, in any cross section of the hybrid reinforcing cord, is incorporated in the multifilament textile yarn.

The present invention therefore relates, in a first aspect thereof, to a tyre for vehicle wheels, comprising a support structure and a tread band arranged in a radially outer position with respect to the support structure.

Preferably, the support structure comprises a plurality of hybrid reinforcing cords.

Preferably, each of said hybrid reinforcing cords comprises at least two strands twisted together with a predetermined twisting pitch.

Preferably, each of said at least two strands comprises at least one monofilament textile wire and at least one multifilament textile yarn comprising a plurality of textile filaments.

Preferably, in any cross section of the hybrid reinforcing cord, said at least one monofilament textile wire is at least partially embedded in the filaments of said at least one multifilament textile yarn.

The use of such hybrid reinforcing cord makes it possible not to reduce the benefits in terms of adhesion due to the provision of multifilament textile yarns and, at the same time, to achieve the benefits discussed above in terms of hysteresis and resistance to compression stresses. In particular, thanks to the fact that the monofilament textile wire is always at least partially embedded or incorporated in the filaments of the multifilament textile yarn, the outer surface of the hybrid reinforcing cord is mainly defined by the filaments of the multifilament textile yarn, so as to offer greater adhesion to the surrounding elastomeric material.

Moreover, the provision of two strands of the type described above, twisted together, makes it possible to improve the resistance to fatigue of the reinforcing cord, while maintaining the benefits discussed above.

In a second aspect thereof, the invention relates to a hybrid reinforcing cord.

Preferably, the hybrid reinforcing cord comprises at least two strands twisted together with a predetermined twisting pitch.

Preferably, each of said at least two strands comprises at least one monofilament textile wire.

Preferably, each of said at least two strands comprises at least one multifilament textile yarn comprising a plurality of textile filaments.

Preferably, in any cross section of the hybrid reinforcing cord, said at least one monofilament textile wire is at least partially embedded in the filaments of said at least one multifilament textile yarn.

The Applicant believes that the hybrid reinforcing cords described above can be used in tyres of all types of vehicles where high performance is required, thus not only in sports automobiles but also for example in sports motorcycles, achieving the benefits discussed above.

As discussed below, the Applicant also believes that the hybrid reinforcing cords described above can be used both in the carcass structure and in the belt structure of the tyre (in both or in only one of the aforementioned structures).

The Applicant also believes that the hybrid reinforcing cords described above can also or only be used in other reinforcing components of the tyre, like for example in the reinforcing components of the tyre that are described below and are indicated as "flipper" and "chafer", both in place of the conventional metallic cords (with consequent advantages in terms of reduction of the weight of the tyre, possibility of identification of the tyre through RFID and possibility of running for the deflated tyre without the risk of overheating the reinforcing cords), and in place of the conventional textile cords comprising only multifilament textile yarns (with consequent advantages in terms of rigidity, resistance to fatigue and performance).

In the specific case of use in the belt structures, according to the Applicant it is also possible to obtain a reduction of the resonant frequencies, with consequent advantages in terms of noise.

In at least one of the aforementioned aspects, the present invention can have at least one of the preferred features described below.

Preferably, in any cross section of the hybrid reinforcing cord, at least 50% of the outer surface of the monofilament textile wire is arranged between, or embedded in, the filaments of said at least one multifilament textile yarn. In this way, the possible portion of outer surface of the monofilament textile wire that, in each cross section of the hybrid cord, would be directly exposed to the surrounding elastomeric material would have an extension such as not to compromise an excellent adhesion of the hybrid reinforcing cord with the surrounding elastomeric material.

In some preferred embodiments, each strand comprises a single monofilament textile wire and a single multifilament textile yarn.

In this case, preferably, in any cross section of the hybrid reinforcing cord, at least 50% of the outer surface of each monofilament textile wire is arranged between, or embedded in, the filaments of the respective multifilament textile yarn. In this way, the chance of having a portion of outer surface of monofilament textile wire directly exposed to the elastomeric material is extremely low.

In other embodiments, each strand comprises more than one monofilament textile wire (for example two monofilament textile wires) and a single multifilament textile yarn.

In further embodiments, each strand comprises a single monofilament textile wire and more than one multifilament textile yarn (for example two multifilament textile yarns).

In further embodiments, each strand comprises more than one monofilament textile wire (for example two monofilament textile wires) and more than one multifilament textile yarn (for example two multifilament textile yarns).

In all of the embodiments, preferably, the twisting pitch P is greater than about 1 mm, more preferably greater than about 2 mm.

Preferably, the twisting pitch P is lower than about 20 mm, more preferably lower than about 15 mm.

In preferred embodiments, the twisting pitch is comprised between about 1 mm and about 20 mm, more preferably between about 2 mm and about 15 mm.

Preferably, said at least one monofilament textile wire is twisted on itself with a predetermined first torsion pitch. The Applicant has observed that such a provision contributes to optimizing the behaviour of the reinforcing cord with regard to fatigue.

Preferably, said first torsion pitch is equal to said predetermined twisting pitch. In this way, the embedding of the monofilament textile wires in the filaments of the respective multifilament textile yarns is maximized, to the great benefit of the adhesion of the reinforcing cord with the surrounding elastomeric material.

Said at least one multifilament textile yarn may or may not be twisted on itself with a predetermined second torsion pitch. When twisted on itself, preferably, the second torsion pitch is equal to said twisting pitch. This has been made in order to maximize the embedding of the monofilament textile wires in the filaments of the multifilament textile yarns.

In some preferred embodiments, said at least one multifilament textile yarn is substantially parallel to said at least one monofilament textile wire.

In other preferred embodiments, the filaments of said at least one multifilament textile yarn are helically wound on said at least one monofilament textile wire with a predetermined winding pitch.

Again in order to maximize the embedding of the monofilament textile wires in the filaments of the multifilament textile yarns, preferably, said winding pitch is equal to said twisting pitch.

Preferably, said at least one monofilament textile wire is made of aliphatic polyamide fibers (for example Nylon 6, Nylon 6.6, Nylon 4.6, Nylon 4.10, Nylon 10.10, Nylon 11, Nylon 12, Nylon 6.10, Nylon 6.12), polyester fibers (for example polybutylene terephthalate, polyethylene terephthalate, polyethylene isophthalate), polyaryletherketone fibers (for example polyether ether ketone), or mixtures thereof.

Preferably, the filaments of said at least one multifilament textile yarn are made of aromatic polyamide fibers, aliphatic polyamide fibers (for example Nylon 6, Nylon 6.6, Nylon 4.6, Nylon 4.10, Nylon 10.10, Nylon 11, Nylon 12, Nylon 6.10, Nylon 6.12), polyester fibers (for example polybutylene terephthalate, polyethylene terephthalate, polyethylene isophthalate), polyketone fibers, polyvinylalcohol fibers, cellulose fibers (for example rayon, lyocell), glass fibers, carbon fibers or mixtures thereof.

Preferably, said at least one monofilament textile wire has a diameter greater than about 0.10 mm, more preferably greater than about 0.15 mm.

Preferably, said at least one monofilament textile wire has a diameter lower than about 0.70 mm, more preferably lower than about 0.50 mm.

In preferred embodiments, said at least one monofilament textile wire has a diameter comprised between about 0.10 mm and about 0.70 mm, more preferably between about 0.15 mm and about 0.50 mm.

In general, preferably, the more monofilament textile wires are contained in each strand of the hybrid reinforcing cord the lower the diameter of said monofilament textile wires.

Preferably, said at least one multifilament textile yarn has a linear density greater than about 400 dTex, more preferably greater than about 800 dTex.

Preferably, said at least one multifilament textile yarn has a linear density lower than about 4000 dTex, more preferably lower than about 2500 dTex.

In preferred embodiments, said at least one multifilament textile yarn has a linear density comprised between about 400 dTex and about 4000 dTex, more preferably between about 800 dTex and about 2500 dTex.

Preferably, said support structure comprises a carcass structure comprising at least one carcass layer having opposite end edges turned around respective annular anchoring structures to define, on opposite sides with respect to an equatorial plane of the tyre, respective bead structures.

Preferably, said support structure comprises a crossed belt structure arranged in a radially outer position with respect to the carcass structure and in a radially inner with respect to the tread band.

Preferably, said plurality of hybrid reinforcing cords is arranged in said carcass structure and/or in said belt structure.

Preferably, said support structure comprises at least one stiffening layer associated with said at least one carcass layer at or close to a respective turned end edge and said plurality of hybrid reinforcing cords is arranged in said at least one stiffening layer.

Preferably, said at least one stiffening layer can be associated with said at least one carcass layer at or close to a respective bead structure.

Preferably, said at least one stiffening layer can be arranged between a respective turned end edge of said at least one carcass layer and a respective bead structure.

More preferably, said at least one stiffening layer can at least partially surround said bead structure. Such a stiffening layer is also indicated with the term "flipper".

Alternatively or additionally, said at least one stiffening layer can be associated with the respective turned end edge of said at least one carcass layer in an axially outer position with respect to the respective annular anchoring structure.

More preferably, said at least one stiffening layer can extend from said annular anchoring structure towards said tread band. Such a stiffening layer is also indicated with the term "chafer".

The chafer can be arranged in an axially outer position or in an axially inner position with respect to the end edge of said at least one carcass layer. In the case in which the carcass structure comprises many carcass layers, for example two, the chafer can be arranged between the respective end edges of the various carcass layers.

Preferably, in all of the embodiments and in all of the applications discussed above, the zero degrees reinforcing layer comprises non-hybrid reinforcing cords that, preferably, comprise only monofilament textile wires or multifilament textile yarns, for example made of aramid or nylon.

However, embodiments are foreseen in which the zero degrees belt layer comprises hybrid reinforcing cords of the type described above.

In first preferred embodiments of a tyre in which said plurality of hybrid reinforcing cords is arranged in the carcass structure, each of said hybrid reinforcing cords comprises two strands twisted together, each of the strands comprising a monofilament textile wire made of nylon and having a diameter equal to about 0.23 mm and a multifilament textile yarn made of nylon and having a linear density equal to about 940 dTex. Such a tyre is particularly suitable for being used in high and ultra-high performance automobiles as defined above.

In second preferred embodiments of a tyre in which said plurality of hybrid reinforcing cords is arranged in the carcass structure, each of said hybrid reinforcing cords comprises two strands twisted together, each of the strands comprising a monofilament textile wire made of nylon and having a diameter equal to about 0.23 mm and a multifilament textile yarn made of aramid and having a linear density equal to about 1100 dTex. Such a tyre is particularly suitable for being used in high-performance sports motorcycles.

In first preferred embodiments of a tyre in which said plurality of hybrid reinforcing cords is arranged in the crossed belt structure, each of said hybrid reinforcing cords comprises two strands twisted together, each of the strands comprising a monofilament textile wire made of PET and having a diameter equal to about 0.30 mm and a multifilament textile yarn made of aramid and having a linear density equal to about 1680 dTex. Such a tyre is particularly suitable for being used in high and ultra-high performance automobiles as defined above and is stronger or more rigid than the current tyres of the Applicant that comprise, in the crossed belt structure, non-hybrid textile reinforcing cords.

In second preferred embodiments of a tyre in which said plurality of hybrid reinforcing cords is arranged in the crossed belt structure, each of said hybrid reinforcing cords comprises three strands twisted together, each of the strands comprising a monofilament textile wire made of PET and having a diameter equal to about 0.40 mm and a multifilament textile yarn made of aramid and having a linear density equal to about 1100 dTex. Such a tyre is also particularly suitable for being used in high and ultra-high performance automobiles as defined above and is lighter, as well as more suitable for identification through RFID, than the current tyres of the Applicant that comprise, in the crossed belt structure, metallic reinforcing cords.

In preferred embodiments of a tyre in which said plurality of hybrid reinforcing cords is arranged in said at least one stiffening layer, for example in the chafer or in the flipper, the hybrid reinforcing cords are identical to those described above in the case of use in the crossed belt structure.

Preferably, said carcass structure comprises a single carcass layer and said plurality of hybrid reinforcing cords is arranged in said single carcass layer. In this way an advantageous reduction in weight is obtained, while maintaining the benefits in terms of hysteresis and rigidity unchanged.

In some embodiments, at least some of said hybrid reinforcing cords comprise at least one metallic wire helically wound around said at least two strands twisted together.

The aforementioned metallic wire advantageously contributes to strengthening the reinforcing cord and to keeping said at least two strands firmly twisted together, without on the other hand impeding the actuation of an identification process through RFID.

The winding direction of the metallic wire on said at least two strands twisted together may or may not be the same as the twisting direction of said at least two strands.

Preferably, the aforementioned winding direction is opposite to the twisting direction of said at least two strands.

Preferably, the metallic wire is wound on said at least two strands twisted together with a winding pitch greater than about 2 mm, more preferably greater than about 3.5 mm.

Preferably, the metallic wire is wound on said at least two strands twisted together with a winding pitch lower than about 10 mm, more preferably lower than about 5 mm.

In preferred embodiments, the metallic wire is wound on said at least two strands twisted together with a winding pitch comprised between about 2 mm and about 10 mm, preferably between about 3.5 mm and about 5 mm.

Preferably, said metallic wire has a diameter greater than about 0.08 mm, more preferably greater than about 0.10 mm.

Preferably, said metallic wire has a diameter lower than about 0.20 mm, more preferably lower than about 0.15 mm.

Preferably, said metallic wire has a diameter comprised between about 0.08 mm and about 0.20 mm, more preferably between about 0.10 mm and about 0.15 mm.

Preferably, the hybrid reinforcing cords comprising the aforementioned metallic wire are used in the crossed belt structures and/or in the aforementioned stiffening layers.

Preferably, the filaments of said at least one multifilament textile yarn are coated with an adhesive substance, or subjected to a chemical or physical adhesivization treatment, in order to further improve the adhesion with the elastomeric material in which they are embedded or with which they are coated.

### DESCRIPTION OF EMBODIMENTS OF THE INVENTION

Further features and advantages of the tyre of the present invention will become clearer from the following detailed description of preferred embodiments thereof, made with reference to the attached drawings. In such drawings:
- figure 1 is a schematic partial half cross-section view of a portion of a tyre according to an embodiment of the present invention;
- figure 2 is a schematic side view of a segment of a first embodiment of a hybrid reinforcing cord used in the tyre of figure 1;
- figure 3 is an enlarged schematic view of a cross section of the hybrid reinforcing cord of figure 2 incorporated in a portion of the tyre of figure 1, such a cross section being taken on the section plane S-S drawn in figure 2;
- figure 4 is a schematic perspective view of the hybrid reinforcing cord of figure 2 in which part of its components have been removed to show other components which otherwise would be hidden;
- figure 5 is a schematic perspective view of a second embodiment of the hybrid reinforcing cord of figure 2 in which part of its components have been removed to show other components which otherwise would be hidden;
- figure 6 is a schematic side view of a segment of a second embodiment of a hybrid reinforcing cord used in the tyre of figure 1.

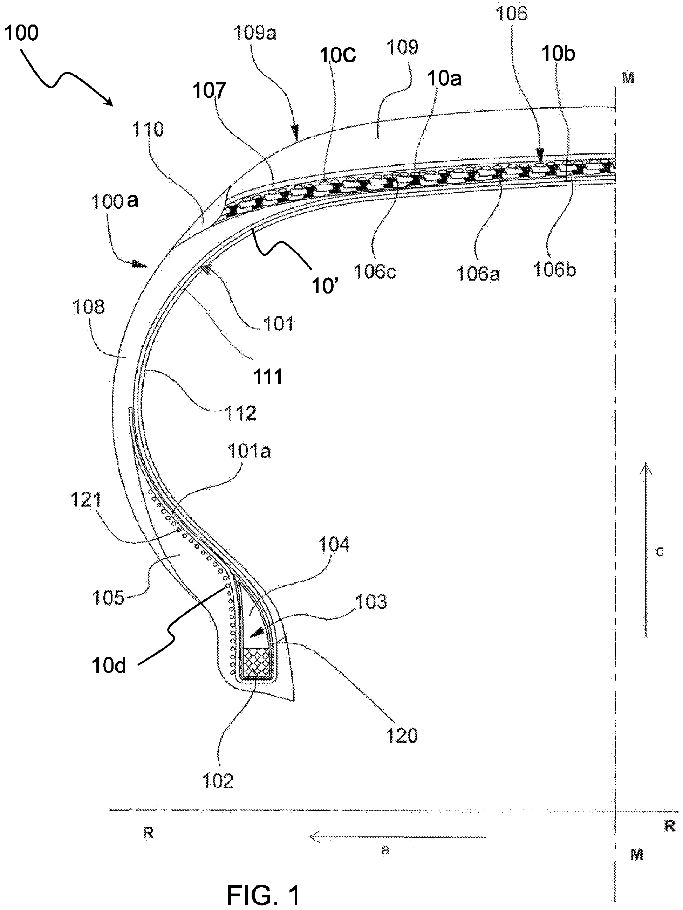

For the sake of simplicity, figure 1 shows only a part of an embodiment of a tyre 100 in accordance with the present invention, the remaining part, which is not shown, being substantially identical and being arranged symmetrically with respect to the equatorial plane M-M of the tyre.

The tyre 100 shown in figure 1 is, in particular, an embodiment of a tyre for four-wheeled vehicles.

Preferably, the tyre 100 is a HP or UHP tyre for sports and/or high or ultra-high performance automobiles.

In figure 1 "a" indicates an axial direction, "c" indicates a radial direction, "M-M" indicates the equatorial plane of the tyre 100 and "R-R" indicates the rotation axis of the tyre 100.

The tyre 100 comprises at least one support structure 100a and, in a radially outer position with respect to the support structure 100a, a tread band 109 made of elastomeric material.

The support structure 100a comprises a carcass structure 101, in turn comprising at least one carcass layer 111.

Hereinafter, for the sake of simplicity of presentation, reference will be made to an embodiment of the tyre 100 comprising a single carcass layer 111. However, it is understood that what is described has analogous application in tyres comprising more than one carcass layer.

The carcass layer 111 has axially opposite end edges engaged with respective annular anchoring structures 102, called bead cores, possibly associated with an elastomeric filler 104. The area of the tyre 100 comprising the bead core 102 and the possible elastomeric filler 104 forms an annular reinforcing structure 103 called "bead structure" and intended to allow the tyre 100 to be anchored on a corresponding mounting rim, not shown.

The carcass layer 111 comprises a plurality of reinforcing cords 10' coated with an elastomeric material or embedded in a matrix of cross-linked elastomeric material.

The carcass structure 101 is of the radial type, i.e. the reinforcing cords 10' are arranged on planes comprising the rotation axis R-R of the tyre 100 and substantially perpendicular to the equatorial plane M-M of the tyre 100.

Each annular reinforcing structure 103 is associated with the carcass structure 101 through folding back (or turning) of the opposite end edges of the at least one carcass layer 111 around the bead core 102 and the possible elastomeric filler 104, so as to form the so-called turnings 101a of the carcass structure 101.

In an embodiment, the coupling between carcass structure 101 and annular reinforcing structure 103 can be carried out through a second carcass layer (not shown in figure 1) applied in a radially outer position with respect to the carcass layer 111.

An anti-abrasion strip 105 is arranged at each annular reinforcing structure 103 so as to surround the annular reinforcing structure 103 along the axially inner, axially outer and radially inner areas of the annular reinforcing structure 103, thus being located between the latter and the rim of the wheel when the tyre 100 is mounted on the rim. Such an anti-abrasion strip 105 can however not be provided.

The support structure 100a comprises, in a radially outer position with respect to the carcass structure 101, a crossed belt structure 106 comprising at least two belt layers 106a, 106b arranged in a radial juxtaposition over one another.

The belt layers 106a, 106b respectively comprise a plurality of reinforcing cords 10a, 10b. Such reinforcing cords 10a, 10b have an orientation inclined with respect to the circumferential direction of the tyre 100, or to the equatorial plane M-M of the tyre 100, by an angle comprised between about 15° and about 45°, preferably between about 20° and about 40°. For example, such an angle is equal to about 30°.

The support structure 100a can also comprise a further belt layer (not shown) arranged between the carcass structure 101 and the radially innermost belt layer of the aforementioned belt layers 106a, 106b and comprising a plurality of reinforcing cords having an orientation inclined with respect to the circumferential direction of the tyre 100, or to the equatorial plane M-M of the tyre 100, by an angle equal to about 90°.

The support structure 100a can also comprise a further belt layer (not shown) arranged in a radially outer position with respect to the radially outermost belt layer of the aforementioned belt layers 106a, 106b and comprising a plurality of reinforcing cords having an orientation inclined with respect to the circumferential direction of the tyre 100, or to the equatorial plane M-M of the tyre 100, by an angle comprised between about 20° and about 70°.

The reinforcing cords 10a, 10b of a belt layer 106a, 106b are parallel to one another and have a crossed orientation with respect to the reinforcing cords of the other belt layer 106b, 106a.

In ultra-high performance tyres, the belt structure 106 can be a turned crossed belt structure. Such a belt structure is made by arranging at least one belt layer on a support element and turning the opposite lateral end edges of said at least one belt layer. Preferably, at first a first belt layer is applied on the support element, then the support element is radially expanded, then a second belt layer is applied on the first belt layer and finally the opposite axial end edges of the first belt layer are turned over the second belt layer to at least partially cover the second belt layer, which is the radially outermost layer. In some cases, a third belt layer can be arranged on the second belt layer. Advantageously, the turning of the axially opposite end edges of a belt layer over another belt layer arranged in a radially outer position thereof imparts greater reactivity and responsiveness of the tyre when cornering.

The support structure 100a comprises, in a radially outer position with respect to the crossed belt structure 106, at least one zero degrees reinforcing layer 106c, commonly known as "zero degrees belt". It comprises reinforcing cords 10c oriented in a substantially circumferential direction. Such reinforcing cords 10c thus form an angle of a few degrees (typically lower than about 10°, for example comprised between about 0° and 6°) with respect to the equatorial plane M-M of the tyre 100.

The reinforcing cords 10a, 10b, 10c are coated with an elastomeric material or embedded in a matrix of cross-linked elastomeric material.

The tread band 109 made of elastomeric material is applied in a radially outer position with respect to the zero degrees reinforcing layer 106c, as well as other constituent semi-finished products of the tyre 100.

Respective sidewalls 108 made of elastomeric material are also applied on the side surfaces of the carcass structure 101, in an axially outer position with respect to the carcass structure 101 itself. Each sidewall 108 extends from one of the lateral edges of the tread band 109 up to the respective annular reinforcing structure 103.

The anti-abrasion strip 105, if provided, extends at least up to the respective sidewall 108.

In some specific embodiments, like the one shown and described here, the rigidity of the sidewall 108 can be improved by providing a stiffening layer 120, generally known as "flipper" or additional strip-like insert, and which has the function of increasing the rigidity and integrity of the annular reinforcing structure 103 and of the sidewall 108.

The flipper 120 is wound around a respective bead core 102 and the elastomeric filler 104 so as to at least partially surround the annular reinforcing structure 103. In particular, the flipper 120 surrounds the annular reinforcing structure 103 along the axially inner, axially outer and radially inner areas of the annular reinforcing structure 103.

The flipper 120 is arranged between the turned end edge of the carcass layer 111 and the respective annular reinforcing structure 103. Usually, the flipper 120 is in contact with the carcass layer 111 and the annular reinforcing structure 103.

In some specific embodiments, like the one shown and described here, the bead structure 103 can also comprise a further stiffening layer 121 that is generally known by the term "chafer", or protective strip, and which has the function of increasing the rigidity and integrity of the annular reinforcing structure 103.

The chafer 121 is associated with a respective turned end edge of the carcass layer 111 in an axially outer position with respect to the respective annular reinforcing structure 103 and extends radially towards the sidewall 108 and the tread band 109.

The flipper 120 and the chafer 121 comprise reinforcing cords 10d (in the attached figure those of the flipper 120 are not visible) coated with an elastomeric material or embedded in a matrix of cross-linked elastomeric material.

The tread band 109 has, in a radially outer position thereof, a rolling surface 109a intended to contact the ground. The rolling surface 109a has circumferential grooves (not shown in figure 1) formed thereon, which are connected by transversal notches (not shown in figure 1) so as to define on the rolling surface 109a a plurality of blocks of various shapes and sizes (not shown in figure 1).

A sub-layer 107 is arranged between the crossed belt structure 106 and the tread band 109.

In some specific embodiments, like the one shown and described here, a strip 110 consisting of elastomeric material, commonly known as "mini-sidewall", can possibly be provided in the connection area between the sidewalls 108 and the tread band 109. The mini-sidewall 110 is generally obtained through co-extrusion with the tread band 109 and allows an improvement of the mechanical interaction between the tread band 109 and the sidewalls 108.

Preferably, an end portion of the sidewall 108 directly covers the lateral edge of the tread band 109.

In the case of tubeless tyres, a layer of rubber 112, generally known as "liner", can also be provided in a radially inner position with respect to the carcass layer 111 to provide the necessary impermeability to the inflation air of the tyre 100.

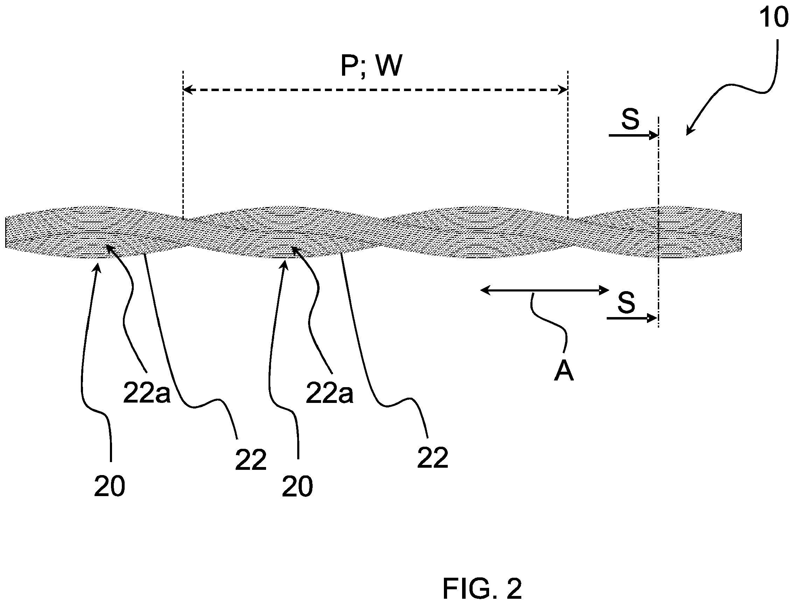

At least some of the reinforcing cords 10' (preferably all of the reinforcing cords 10' provided in the carcass layer 111) and/or the reinforcing cords 10a, 10b (preferably all of the reinforcing cords 10a provided in the belt layer 106a and all of the reinforcing cords 10b provided in the belt layer 106b, even in the case in which the belt structure 106 is a turned crossed belt structure) and/or the reinforcing cords 10c of the flipper 120 and/or of the chafer 121 are hybrid reinforcing cords 10 of the type shown in figures 2-6 and described below.

The reinforcing cords 10c, on the other hand, are preferably non-hybrid reinforcing cords, i.e. they are made of a single textile material, preferably aramid or nylon.

With reference to figures 2-4, the hybrid reinforcing cord 10 comprises two strands 20 twisted together with a predetermined twisting pitch P.

Preferably, the two strands 20 are identical to each other. Therefore, only one of them will be described hereinafter.

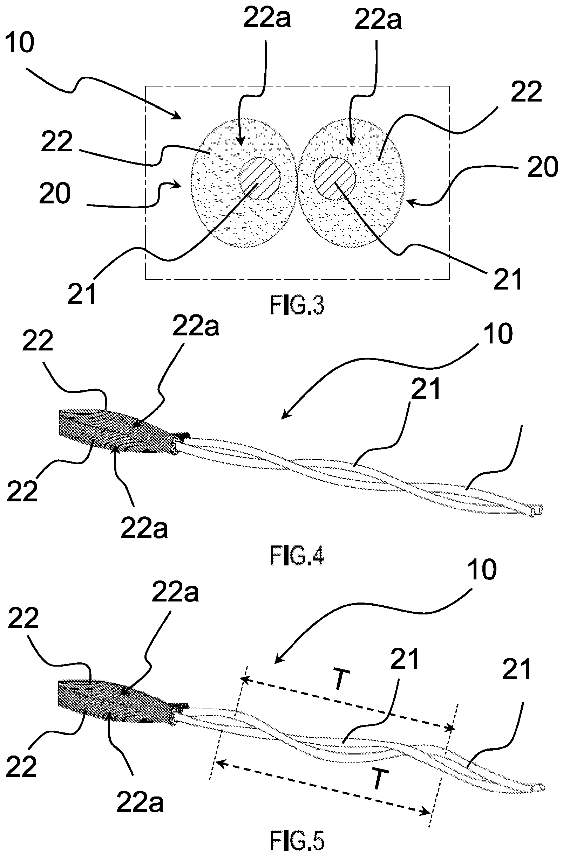

As shown in figures 3 and 4, the strand 20 comprises a single monofilament textile wire 21 and a single multifilament textile yarn 22 defined by a plurality of filaments 22a. Each strand 21 can however comprise more than one monofilament textile wire 21 and more than one multifilament textile yarn 22.

In any cross section of the reinforcing cord 10, the monofilament textile wire 21 is embedded in the filaments 22a of the multifilament textile yarn 22.

In the embodiment shown in figures 3 and 4, the monofilament textile wire 21 is, in any cross section of the reinforcing cord 10, completely embedded in the filaments 22a of the multifilament textile yarn 22 and, therefore, the aforementioned filaments 22 are arranged around the monofilament textile wire 21 so as to completely surround the monofilament textile wire 21.

Therefore, in figure 2, the monofilament textile wire 21 is not visible since it is entirely covered by the filaments of the multifilament textile yarn 22.

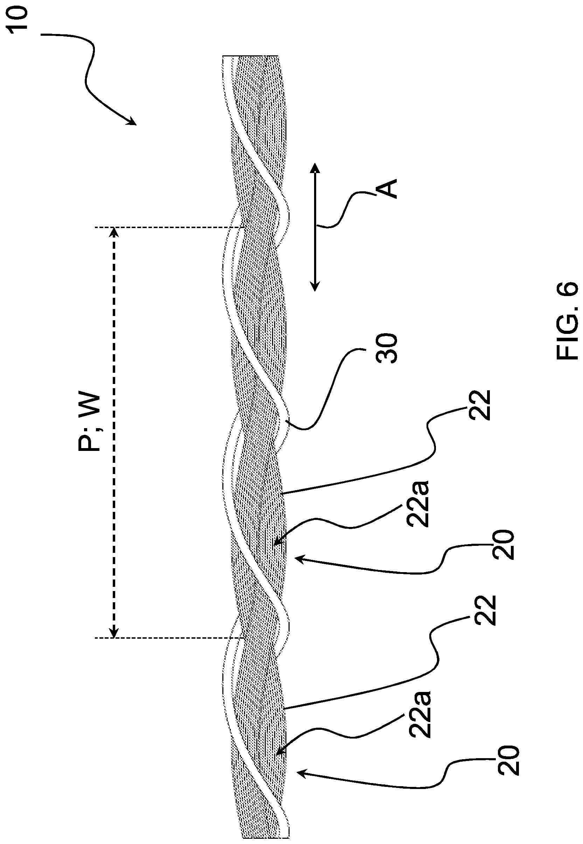

Although the embodiment of figures 2-4 (and as will be seen hereinafter also the embodiment of figure 5 and figure 6) in which the monofilament textile wire 21 is, in any cross section of the reinforcing cord 10, completely embedded in the filaments 22a of the multifilament textile yarn 22 is particularly preferred, embodiments are equally preferred in which, in any cross section of the reinforcing cord 10, the monofilament textile wire 21 is only partially embedded in the filaments 22a of the multifilament textile yarn 22, and in particular those in which at least 50% of the outer surface of the monofilament textile wire 21 is embedded in the filaments 22a of the multifilament textile yarn 22.

The monofilament textile wire 21 extends along a longitudinal direction A, shown in figure 2.

The mutual arrangement of the monofilament textile wire 21 and of the filaments 22a of the multifilament textile yarn 22 along the longitudinal direction A can be such that the monofilament textile wire 21 extends substantially parallel to the filaments 22a of the multifilament textile yarn 22, as shown in figure 4, or such that the filaments 22a of the multifilament textile yarn 22 are helically wound on the monofilament textile wire 21 with a predetermined winding pitch W that, preferably, is equal to the twisting pitch P.

In this last case, the direction of twisting of the two strands 20 is preferably the same as that of winding of the filaments 22a of the multifilament textile yarn 22 on the monofilament textile wire 21, but it is possible to foreseen opposite directions.

The twisting pitch P is preferably comprised between about 1 mm and about 20 mm, more preferably between about 2 mm and about 15 mm, for example equal to about 12.5 mm.

Figure 5 shows an embodiment of the hybrid reinforcing cord 10 that differs from the one shown in figures 2 and 3 only in that the monofilament textile wire 21 is twisted on itself with a predetermined torsion pitch T.

Preferably, the torsion pitch T is equal to the twisting pitch P.

The direction of torsion of the monofilament textile wire 21 can be equal or opposite to that of the twisting of the two strands 20.

The monofilament textile wire 21 is made of aliphatic polyamide fibers, for example Nylon 6, Nylon 6.6, Nylon 4.6, Nylon 4.10, Nylon 10.10, Nylon 11, Nylon 12, Nylon 6.10, Nylon 6.12, or polyester fibers, for example polybutylene terephthalate (PBT), polyethylene terephthalate (PET), polyethylene isophthalate (PEI), or polyaryletherketone fibers, for example polyetheretherketone (PEEK), or mixtures thereof.

The filaments 22a of the multifilament textile yarn 22 are made of aromatic polyamide fibers, or aliphatic polyamide fibers, for example Nylon 6, Nylon 6.6, Nylon 4.6, Nylon 4.10, Nylon 10.10, Nylon 11, Nylon 12, Nylon 6.10, Nylon 6.12, or polyester fibers, for example polybutylene terephthalate (PBT), polyethylene terephthalate (PET), polyethylene isophthalate (PEI), or polyketone fibers, or polyvinylalcohol fibers, or cellulose fibers, for example rayon or lyocell), or glass or carbon fibers, or any mixture of the aforementioned fibers, or assemblies of mixed fibers comprising two or more of the materials listed previously. Such assemblies of mixed fibers are indicated hereinafter with the term "commingled fibers".

In the case of "commingled fibers", the fibers of the filaments 22a can for example comprise:
- 50% of Aramid with linear density equal to about 1100 dTex and 50% of PET with linear density equal to about 1100 dTex (such an assembly is indicated hereinafter as "Commingled 2200 dTex");
- 43% of Aramid with linear density equal to about 840 dTex and 57% of PET with linear density equal to about 1100 dTex (such an assembly is indicated hereinafter as "Commingled 1940 dTex");
- 33% of Aramid with linear density equal to about 550 dTex and 67% of PET with linear density equal to about 1100 dTex (such an assembly is indicated hereinafter as "Commingled 1650 dTex").

Irrespective of the specific type of textile material used for the filaments 22a of the multifilament textile yarn 22, such a material is suitably subjected to adhesivization to be made adhesive on the surface so as to offer adequate adhesivity to the surrounding elastomeric material. Typically, the adhesivization can be carried out through coating with an adhesive substance or through a chemical or physical treatment.

For example, the adhesivization is carried out through immersion of the hybrid reinforcing cord 10, after having twisted together the two strands 20, in a solution comprising the adhesive substance.

The monofilament textile wire 21 preferably has a diameter comprised between about 0.10 mm and about 0.70 mm, more preferably between about 0.15 mm and about 0.50 mm, also depending on the material from which it is made and the area of the tyre 100 in which the hybrid reinforcing cord 10 are arranged.

The multifilament textile yarn 22 preferably has a linear density comprised between about 400 dTex and about 4000 dTex, preferably between about 800 dTex and about 2500 dTex, also depending on the material from which it is made and the area of the tyre 100 in which the hybrid reinforcing cord 10 are arranged.

In specific embodiments, only the reinforcing cords 10', and not also the reinforcing cords 10a, 10b and 10d, or vice-versa, are hybrid reinforcing cords 10 of the type described above.

In other specific embodiments, only the reinforcing cords 10a, and not also the reinforcing cords 10', 10b, 10d or vice-versa, are hybrid reinforcing cords 10 of the type described above.

In some embodiments, only the reinforcing cords 10a and/or 10b, and not also the reinforcing cords 10' and 10d, are hybrid reinforcing cords 10 of the type described above.

In further other embodiments, only the reinforcing cords 10d, and not also the reinforcing cords 10', 10a and/or 10b, are hybrid reinforcing cords 10 of the type described above.

When the reinforcing cords 10d are hybrid reinforcing cords 10 of the type described above, such hybrid reinforcing cords 10 can be used only in the flipper 120 (if provided and when the chafer is not provided or is provided and comprises non-hybrid reinforcing cords), only in the chafer 121 (if provided and when the chafer is not provided or is provided and comprises non-hybrid reinforcing cords), or both in the flipper 120 and in the chafer 121 (if both are provided).

Figure 6 shows an embodiment of the hybrid reinforcing cord 10 that differs from that of the previous figures only in that the hybrid reinforcing cord 20 also comprises a metallic wire 30 helically wound around the two strands 20 twisted together.

In the embodiment shown, the winding direction of the metallic wire 30 is opposite to the twisting direction of the two strands 20.

The winding of the metallic wire 30 has a winding pitch preferably comprised between about 2 mm and about 10 mm, more preferably between about 3.5 mm and about 5 mm, for example equal to about 4 mm.

The Applicant has made some samples of hybrid reinforcing cords 10 for the carcass structure 101, for the crossed belt structure 106 and for the stiffening layers 120, 121 of the tyre 100 of the present invention.

For being used in the carcass structure 101 of a tyre 100 of the type shown in figure 1, and thus intended to be used in high and ultra-high performance automobiles as defined above, a hybrid reinforcing cord 10 has been made comprising two strands 20 twisted together, each of the strands comprising a monofilament textile wire 21 made of nylon and having a diameter equal to about 0.23 mm and a multifilament textile yarn 22 made of nylon and having a linear density equal to about 940 dTex. Hereinafter, such a cord is indicated with 2x(Ny 0.23 mm + Ny 940 dtex).

For being used in the carcass structure of a tyre intended to be used in high performance sports motorcycles, a hybrid reinforcing cord 10 has been made comprising two strands 20 twisted together, each of the strands comprising a monofilament textile wire 21 made of nylon and having a diameter equal to about 0.23 mm and a multifilament textile yarn 22 made of aramid and having a linear density equal to about 1100 dTex. Hereinafter, such a hybrid reinforcing cord 10 is indicated with 2x(Ny 0.23 mm + Ar 1100 dTex).

Another example of hybrid reinforcing cord 10 made by the Applicant, preferably for an application in the carcass structure of high and ultra-high performance automobiles and/or high performance sports motorcycles, is the 2x(Ny 0.21 mm + Ny 1400 dTex), i.e. it comprises two strands 20 twisted together, each of the strands comprising a monofilament textile wire 21 made of nylon and having a diameter equal to about 0.21 mm and a multifilament textile yarn 22 made of nylon and having a linear density equal to about 1400 dTex.

For being used in the crossed belt structure 106 of a tyre 100 of the type shown in figure 1, and thus intended to be used in high and ultra-high performance automobiles as defined above, a hybrid reinforcing cord 10 has been made comprising two strands 20, each of the strands comprising a monofilament textile wire 21 made of PET and having a diameter equal to about 0.30 mm and a multifilament textile yarn 22 made of aramid and having a linear density equal to about 1680 dTex. Hereinafter, such a hybrid reinforcing cord 10 is indicated with 2x(PET 0.30 mm + Ar 1680 dTex).

Again for being used in the crossed belt structure 106 of a tyre 100 of the type shown in figure 1, a hybrid reinforcing cord has been made comprising three strands 20 twisted together, each of the strands comprising a monofilament textile wire 21 made of PET and having a diameter equal to about 0.40 mm and a multifilament textile yarn 22 made of aramid and having a linear density equal to about 1100 dTex. Hereinafter, such a hybrid reinforcing cord 10 is indicated with 3x(PET 0.40 mm + Ar 1100 dTex).

The Applicant has also made reinforcing cords 10 for the stiffening layer 121 of the tyre 100. Such reinforcing cords 10 have the same structure and are made with the same materials described above with reference to the crossed belt structure 106.

### COMPARATIVE TESTS

On some of the reinforcing cords 10 described above the Applicant has carried out comparative tests with respect to conventional reinforcing cords. Some of such tests are discussed below.

A test was carried out for measuring the hysteresis (energy dissipated as a result of the friction between the wires/filaments) of a piece of 200 mm of a hybrid reinforcing cord of type 2x(Ny 0.23 mm + Ny 940 dTex) with respect to the hysteresis of a piece of 200 mm of a conventional reinforcing cord made by twisting together two strands of nylon 1400 dTex.

Both of the pieces described above were subjected to 100 cycles of traction and compression through a Zwick dynamometer, subjecting the aforementioned pieces to a load increasing up to 12 N between a maximum elongation of 1.5 % (equal to 3 mm) and a minimum elongation of 0.5 % (equal to 1 mm), with an application speed of the traction/compression equal to 50 mm/min. The average of the measurements carried out gave as an indicative value of the energy dissipated a value equal to 2.45 for the conventional reinforcing cord and equal to 2.24 for the hybrid reinforcing cord of type 2x(Ny 0.23 mm + Ny 940 dTex), confirming the better behaviour of the hybrid reinforcing cord of the invention in terms of hysteresis with respect to a conventional reinforcing cord comprising only a multifilament textile yarn. Hence the advisability of using the hybrid reinforcing cord of type 2x(Ny 0.23 mm + Ny 940 dTex) in the carcass structure of the tyre.

The hybrid reinforcing cord of type 2x(Ny 0.23 mm + Ny 940 dTex) was also subjected to a comparative test for measuring the flexional rigidity thereof (i.e. the capability of withstanding flexing stresses). For this purpose a specimen of vulcanized elastomeric material comprising a plurality of hybrid reinforcing cords of type 2x(Ny 0.23 mm + Ny 940 dTex), with thread count equal to 108 cords/dm, and a specimen of vulcanized elastomeric material comprising a plurality of conventional reinforcing cords, each of the cords comprising two strands of nylon 1400 dTex, with thread count equal to 112 cords/dm were made.

Both of the specimens described above were subjected to a ring crush test as follows: the specimens were folded and welded to create respective rings having a diameter of 80 mm. Such specimens were subjected to an initial pretensioning of 0.5 N and to a squashing of 25 mm, with a compression speed of 100 mm/min.

The specimen comprising the hybrid reinforcing cords of type 2x(Ny 0.23 mm + Ny 940 dTex) withstood a maximum force of 0.282 N, whereas the specimen comprising the conventional reinforcing cords withstood a maximum force of 0.243 N, confirming the better behaviour of the hybrid reinforcing cord of the invention in terms of flexional rigidity with respect to a conventional reinforcing cord comprising only a multifilament textile yarn. Hence the advisability of using the hybrid reinforcing cord of type 2x(Ny 0.23 mm + Ny 940 dTex) in the carcass structure of the tyre.

The Applicant also carried out comparative tests to measure the flexional rigidity of a hybrid reinforcing cord of type 2x(PET 0.30 mm + Ar 1680 dTex) with respect to that of a conventional reinforcing cord. For this purpose, a specimen of vulcanized elastomeric material comprising a plurality of hybrid reinforcing cords of type 2x(PET 0.30 mm + Ar 1680 dTex), with thread count equal to 70 cords/dm (7 cords in 1 cm), and a specimen of vulcanized elastomeric material comprising a plurality of conventional metallic reinforcing cords, each of the cords comprising 3 steel wires of 0.22 mm twisted together were made, the latter specimen comprising 11 cords in 1 cm.

Both of the specimens described above were subjected to a ring crush test as described above.

The specimen comprising the hybrid reinforcing cords of type 2x(PET 0.30 mm + Ar 1680 dTex) withstood a maximum force of about 3.2 N, whereas the specimen comprising the conventional metallic reinforcing cords withstood a maximum force of about 2.3 N, confirming the better behaviour of the hybrid reinforcing cord of the invention in terms of flexional rigidity with respect to a conventional metallic reinforcing cord. Hence the advisability of using the hybrid reinforcing cord of type 2x(PET 0.30 mm + Ar 1680 dTex) in the belt structure of the tyre, as well as also in the chafer and/or flipper.

The present invention has been described with reference to some preferred embodiments. Different changes can be made to the embodiments described above, while still remaining within the scope of protection of the invention, defined by the following claims.

## Claims

1. Tyre (100) for vehicle wheels, comprising a support structure (100a) and a tread band (109) arranged in a radially outer position with respect to the support structure (100a), wherein the support structure (100a) comprises a plurality of hybrid reinforcing cords (10), each of said hybrid reinforcing cords (10) having at least two strands (20) twisted together with a predetermined twisting pitch (P), wherein each of said at least two strands (20) comprises:
- at least one monofilament textile wire (21);
- at least one multifilament textile yarn (22) comprising a plurality of textile filaments (22a);
wherein, in any cross section of the hybrid reinforcing cord (10), said at least one monofilament textile wire (21) is at least partially embedded in the filaments (22a) of said at least one multifilament textile yarn (22).

2. Tyre (100) according to claim 1, wherein, in any cross section of the hybrid reinforcing cord (10), at least 50% of the outer surface of the monofilament textile wire (21) is embedded in the filaments (22a) of said at least one multifilament textile yarn (22).

3. Tyre (100) according to claim 1 or 2, wherein said at least one monofilament textile wire (21) is twisted on itself with a predetermined first torsion pitch (T).

4. Tyre (100) according to claim 3, wherein said first torsion pitch (T) is equal to said predetermined twisting pitch (P).

5. Tyre (100) according to any one of the previous claims, wherein said at least one multifilament textile yarn (22) is substantially parallel to said at least one monofilament textile wire (21).

6. Tyre (100) according to any one of claims 1 to 4, wherein the filaments (22a) of said at least one multifilament textile yarn (22) are helically wound on said at least one monofilament textile wire (21) with a predetermined winding pitch (W).

7. Tyre (100) according to claim 6, wherein said winding pitch (W) is equal to said twisting pitch (P).

8. Tyre (100) according to any one of the previous claims, wherein said at least one monofilament textile wire (21) is made of aliphatic polyamide fibers, polyester fibers, polyaryletherketone fibers or mixtures thereof and the filaments (22a) of said at least one multifilament textile yarn (22) are made of aromatic polyamide fibers, aliphatic polyamide fibers, polyester fibers, polyketone fibers, polyvinylalcohol fibers, cellulose fibers, glass fibers, carbon fibers or mixtures thereof.

9. Tyre (100) according to any one of the previous claims, wherein each of said at least two strands (20) comprises a single monofilament textile wire (21) and a single multifilament textile yarn (22).

10. Tyre (100) according to any one of the previous claims, wherein said at least one monofilament textile wire (21) has a diameter comprised between about 0.10 mm and about 0.70 mm.

11. Tyre (100) according to any one of the previous claims, wherein said at least one multifilament textile yarn has a linear density comprised between about 400 dTex and about 4000 dTex.

12. Tyre (100) according to any one of the previous claims, wherein said support structure (100a) comprises:
- a carcass structure (101) comprising at least one carcass layer (111) having opposite end edges (101a) turned around respective annular anchoring structures (102) to define, on opposite sides with respect to an equatorial plane (X) of the tyre (100), respective bead structures (103);
- a crossed belt structure (106) arranged in a radially outer position with respect to the carcass structure (101) and in a radially inner position with respect to the tread band (109);
wherein said plurality of hybrid reinforcing cords (10) are arranged in at least one of:
- said carcass structure (101);
- said belt structure (106);
- at least one stiffening layer (120, 121) associated with said at least one carcass layer (111) at or close to a respective turned end edge (101a).

13. Tyre (100) according to any one of the previous claims, wherein at least some of said hybrid reinforcing cords (10) comprise at least one metallic wire (30) helically wound around said at least two strands (20) twisted together.

14. Tyre (100) according to claim 13, wherein said at least two strands (20) are twisted together according to a predetermined twisting direction and wherein said at least one metallic wire (30) is wound on said at least two strands (20) twisted together with a winding direction opposite to said predetermined twisting direction.

15. Hybrid reinforcing cord (10), comprising at least two strands (20) twisted together with a predetermined twisting pitch (P), wherein each of said at least two strands (20) comprises:
- at least one monofilament textile wire (21);
- at least one multifilament textile yarn (22) comprising a plurality of textile filaments (22a);
wherein, in any cross section of the hybrid reinforcing cord (10), said at least one monofilament textile wire (21) is at least partially embedded in the filaments (22a) of said at least one multifilament textile yarn (22).

## Patentansprüche

1. Reifen (100) für Fahrzeugräder, umfassend eine Trägerstruktur (100a) und ein Laufflächenband (109), das in einer radial äußeren Position in Bezug auf die Trägerstruktur (100a) angeordnet ist, wobei die Trägerstruktur (100a) eine Mehrzahl von hybriden Verstärkungscords (10) umfasst, wobei jeder der hybriden Verstärkungscords (10) mindestens zwei Stränge (20) aufweist, die mit einem vorbestimmten Verdrillungsschritt (P) miteinander verdrillt sind, wobei jeder der mindestens zwei Stränge (20) umfasst:
- mindestens einen Monofilament-Textildraht (21);
- mindestens ein Multifilament-Textilgarn (22), das eine Mehrzahl von Textilfilamenten (22a) umfasst;
wobei in einem beliebigen Querschnitt des hybriden Verstärkungscords (10) der mindestens eine Monofilament-Textildraht (21) zumindest teilweise in die Filamente (22a) des mindestens einen Multifilament-Textilgarns (22) eingebettet ist.

2. Reifen (100) nach Anspruch 1, wobei in einem beliebigen Querschnitt des hybriden Verstärkungscords (10) mindestens 50 % der Außenfläche des Monofilament-Textildrahtes (21) in die Filamente (22a) des mindestens einen Multifilament-Textilgarns (22) eingebettet sind.

3. Reifen (100) nach Anspruch 1 oder 2, wobei der mindestens eine Monofilament-Textildraht (21) mit einem vorbestimmten ersten Torsionsschritt (T) auf sich selbst verdrillt ist.

4. Reifen (100) nach Anspruch 3, wobei der erste Torsionsschritt (T) gleich dem vorbestimmten Verdrillungsschritt (P) ist.

5. Reifen (100) nach einem der vorhergehenden Ansprüche, wobei das mindestens eine Multifilament-Textilgarn (22) im Wesentlichen parallel zu dem mindestens einen Monofilament-Textildraht (21) ist.

6. Reifen (100) nach einem der Ansprüche 1 bis 4, wobei die Filamente (22a) des mindestens einen Multifilament-Textilgarns (22) mit einem vorbestimmten Wicklungsschritt (W) spiralförmig auf den mindestens einen Monofilament-Textildraht (21) gewickelt sind.

7. Reifen (100) nach Anspruch 6, wobei der Wicklungsschritt (W) gleich dem Verdrillungsschritt (P) ist.

8. Reifen (100) nach einem der vorhergehenden Ansprüche, wobei der mindestens eine Monofilament-Textildraht (21) aus aliphatischen Polyamidfasern, Polyesterfasern, Polyaryletherketonfasern oder Mischungen davon hergestellt ist und die Filamente (22a) des mindestens einen Multifilament-Textilgarns (22) aus aromatischen Polyamidfasern, aliphatischen Polyamidfasern, Polyesterfasern, Polyketonfasern, Polyvinylalkoholfasern, Cellulosefasern, Glasfasern, Kohlefasern oder Mischungen davon hergestellt sind.

9. Reifen (100) nach einem der vorhergehenden Ansprüche, wobei jeder der mindestens zwei Stränge (20) einen einzigen Monofilament-Textildraht (21) und ein einziges Multifilament-Textilgarn (22) umfasst.

10. Reifen (100) nach einem der vorhergehenden Ansprüche, wobei der mindestens eine Monofilament-Textildraht (21) einen Durchmesser aufweist, der zwischen etwa 0,10 mm und etwa 0,70 mm liegt.

11. Reifen (100) nach einem der vorhergehenden Ansprüche, wobei das mindestens eine Multifilament-Textilgarn eine lineare Dichte aufweist, die zwischen etwa 400 dTex und etwa 4000 dTex liegt.

12. Reifen (100) einem der vorhergehenden Ansprüche, wobei die Trägerstruktur (100a) umfasst:
- eine Karkassenstruktur (101), die mindestens eine Karkassenschicht (111) mit gegenüberliegenden Endkanten (101a) aufweist, die um jeweilige ringförmige Verankerungsstrukturen (102) umgedreht sind, um auf gegenüberliegenden Seiten in Bezug auf eine Äquatorialebene (X) des Reifens (100) jeweilige Wulststrukturen (103) zu definieren;
- eine gekreuzte Riemenstruktur (106), die in einer radial äußeren Position in Bezug auf die Karkassenstruktur (101) und in einer radial inneren Position in Bezug auf das Laufflächenband (109) angeordnet ist;
wobei die Mehrzahl von hybriden Verstärkungscords (10) in zumindest einer angeordnet ist von:
- der Karkassenstruktur (101);
- der Riemenstruktur (106);
- mindestens einer Versteifungsschicht (120, 121), die mit der mindestens einen Karkassenschicht (111) an oder nahe einer jeweiligen umgedrehten Endkante (101a) verbunden ist.

13. Reifen (100) nach einem der vorhergehenden Ansprüche, wobei zumindest einige der hybriden Verstärkungscords (10) mindestens einen Metalldraht (30) umfassen, der spiralförmig um die mindestens zwei miteinander verdrillten Stränge (20) gewickelt ist.

14. Reifen (100) nach Anspruch 13, wobei die mindestens zwei Stränge (20) gemäß einer vorbestimmten Verdrillungsrichtung miteinander verdrillt sind, und wobei der mindestens eine Metalldraht (30) mit einer zu der vorbestimmten Verdrillungsrichtung entgegengesetzten Wicklungsrichtung auf die mindestens zwei miteinander verdrillten Stränge (20) gewickelt ist.

15. Hybrider Verstärkungscord (10), umfassend mindestens zwei Stränge (20), die mit einem vorbestimmten Verdrillungsschritt (P) miteinander verdrillt sind, wobei jeder der mindestens zwei Stränge (20) umfasst:
- mindestens einen Monofilament-Textildraht (21);
- mindestens ein Multifilament-Textilgarn (22), das eine Mehrzahl von Textilfilamenten (22a) umfasst;
wobei in einem beliebigen Querschnitt des hybriden Verstärkungscords (10) der mindestens eine Monofilament-Textildraht (21) zumindest teilweise in die Filamente (22a) des mindestens einen Multifilament-Textilgarns (22) eingebettet ist.

## Revendications

1. Pneu (100) pour roues de véhicule, comprenant une structure de support (100a) et une bande de roulement (109) agencée dans une position radialement externe par rapport à la structure de support (100a), où la structure de support (100a) comprend une pluralité de câblés de renfort hybrides (10), chacun desdits câblés de renfort hybrides (10) ayant au moins deux brins (20) torsadés ensemble avec un pas de torsadage prédéterminé (P), où chacun desdits au moins deux brins (20) comprend :
- au moins un fil textile monofilament (21) ;
- au moins un filé textile multifilament (22) comprenant une pluralité de filaments textiles (22a) ;
dans lequel, dans n'importe quelle section transversale du câblé de renfort hybride (10), ledit au moins un fil textile monofilament (21) est au moins partiellement incorporé dans les filaments (22a) dudit au moins un filé textile multifilament (22).

2. Pneu (100) selon la revendication 1, dans lequel, dans n'importe quelle section transversale du câblé de renfort hybride (10), au moins 50% de la surface externe du fil textile monofilament (21) est incorporé dans les filaments (22a) dudit au moins un filé textile multifilament (22).

3. Pneu (100) selon la revendication 1 ou 2, dans lequel ledit au moins un fil textile monofilament (21) est torsadé sur lui-même avec un premier pas de torsion prédéterminé (T).

4. Pneu (100) selon la revendication 3, dans lequel ledit premier pas de torsion (T) est égal audit pas de torsadage prédéterminé (P).

5. Pneu (100) selon l'une quelconque des revendications précédentes, dans lequel ledit au moins un filé textile multifilament (22) est sensiblement parallèle audit au moins un fil textile monofilament (21).

6. Pneu (100) selon l'une quelconque des revendications 1 à 4, dans lequel les filaments (22a) dudit au moins un filé textile multifilament (22) sont enroulés en hélice sur ledit au moins un fil textile monofilament (21) avec un pas d'enroulement prédéterminé (W).

7. Pneu (100) selon la revendication 6, dans lequel ledit pas d'enroulement (W) est égal audit pas de torsadage (P).

8. Pneu (100) selon l'une quelconque des revendications précédentes, dans lequel ledit au moins un fil textile monofilament (21) est réalisé en fibres de polyamide aliphatique, fibres de polyester, fibres de polyaryléthercétone ou des mélanges de celles-ci et les filaments (22a) dudit au moins un filé textile multifilament (22) sont réalisés en fibres de polyamide aromatique, fibres de polyamide aliphatique, fibres de polyester, fibres de polycétone, fibres d'alcool polyvinylique, fibres de cellulose, fibres de verre, fibres de carbone ou des mélanges de celles-ci.

9. Pneu (100) selon l'une quelconque des revendications précédentes, dans lequel chacun desdits au moins deux brins (20) comprend un seul fil textile monofilament (21) et un seul filé textile multifilament (22).

10. Pneu (100) selon l'une quelconque des revendications précédentes, dans lequel ledit au moins un fil textile monofilament (21) a un diamètre compris entre environ 0,10 mm et environ 0,70 mm.

11. Pneu (100) selon l'une quelconque des revendications précédentes, dans lequel ledit au moins un filé textile multifilament a une masse linéique comprise entre environ 400 dTex et environ 4000 dTex.

12. Pneu (100) selon l'une quelconque des revendications précédentes, dans lequel ladite structure de support (100a) comprend :
- une structure de carcasse (101) comprenant au moins une couche de carcasse (111) ayant des bords d'extrémité opposés (101a) tournés autour de structures d'ancrage annulaires respectives (102) pour définir, sur des côtés opposés par rapport à un plan équatorial (X) du pneu (100), des structures de talon respectives (103) ;
- une structure de ceinture croisée (106) agencée dans une position radialement externe par rapport à la structure de carcasse (101) et dans une position radialement interne par rapport à la bande de roulement (109) ;
dans lequel ladite pluralité de câblés de renfort hybrides (10) sont agencés dans au moins l'une parmi :
- ladite structure de carcasse (101) ;
- ladite structure de ceinture (106) ;
- au moins une couche de raidissement (120, 121) associée à ladite au moins une couche de carcasse (111) au niveau ou à proximité d'un bord d'extrémité tourné respectif (101a).

13. Pneu (100) selon l'une quelconque des revendications précédentes, dans lequel au moins certains desdits câblés de renfort hybrides (10) comprennent au moins un fil métallique (30) enroulé en hélice autour desdits au moins deux brins (20) torsadés ensemble.

14. Pneu (100) selon la revendication 13, dans lequel lesdits au moins deux brins (20) sont torsadés ensemble selon un sens de torsadage prédéterminé et dans lequel ledit au moins un fil métallique (30) est enroulé sur lesdits au moins deux brins (20) torsadés ensemble avec un sens d'enroulement opposé audit sens de torsadage prédéterminé.

15. Câblé de renfort hybride (10), comprenant au moins deux brins (20) torsadés ensemble avec un pas de torsadage prédéterminé (P), dans lequel chacun desdits au moins deux brins (20) comprend :
- au moins un fil textile monofilament (21) ;
- au moins un filé textile multifilament (22) comprenant une pluralité de filaments textiles (22a) ;
dans lequel, dans n'importe quelle section transversale du câblé de renfort hybride (10), ledit au moins un fil textile monofilament (21) est au moins partiellement incorporé dans les filaments (22a) dudit au moins un filé textile multifilament (22).
